# EUROPÄISCHE PATENTSCHRIFT

(11) **EP 1 253 790 B1**
(45) Veröffentlichungstag und Bekanntmachung des Hinweises auf die Patenterteilung: **07.03.2007**
(21) Anmeldenummer: 02100356.1
(22) Anmeldetag: 09.04.2002
(51) Int. Cl.: H04Q 3/62

(54) **Vermittlungseinrichtung und zentrale Vermittlungssteuerung mit internem Breitbandbus**
Switching device and central switch control with an internal broadband bus
Dispositif de commutation et commande centrale avec un bus interne large bande

(30) Priorität: 24.04.2001 DE 10120073
(43) Veröffentlichungstag der Anmeldung: 30.10.2002
(73) Patentinhaber: SIEMENS AKTIENGESELLSCHAFT, 80333 München (DE)
(72) Erfinder: Lucioni, Gonzalo, Dr., 58454 Witten (DE)

(56) Entgegenhaltungen:
- DE-A1- 4 002 862
- BACHELET B ET AL: "ALCATEL 4400 : AUTOCOMMUTATEUR PRIVE A LARGE BANDE" COMMUTATION ET TRANSMISSION, SOTELEC. PARIS, FR, Bd. 16, Nr. 1, Januar 1994 (1994-01), Seiten 21-28, XP000430159 PARIS, FR ISSN: 0242-1283
- BOULLET M: "ALCATEL 4400 ATM: FIRST MASTER APPLICATION" ELECTRICAL COMMUNICATION, ALCATEL. BRUSSELS, BE, Oktober 1996 (1996-10), Seiten 284-290, XP000681901 ISSN: 0013-4252
- "MIXING VOICE AND DATA ON THE BACKBONE" DATA COMMUNICATIONS, MCGRAW HILL. NEW YORK, US, Bd. 22, Nr. 1, Januar 1993 (1993-01), Seiten 116-117, XP000332679 ISSN: 0363-6399

## Beschreibung

Die Erfindung betrifft eine Vermittlungseinrichtung gemäß dem Oberbegriff von Patentanspruch 1 sowie eine zentrale Vermittlungssteuerung gemäß dem Oberbegriff von Patentanspruch 11.

Zeitgemäße Vermittlungseinrichtungen weisen in der Regel eine zentrale prozessorgestützte Steuerbaugruppe (Central Board) auf, an die über spezielle Hardware-Schnittstellen unterschiedliche Peripheriebaugruppen und interne Systemkomponeneten der Vermittlungseinrichtung angeschlossen sind. Über die Peripheriebaugruppen können externe Kommunikationseinrichtungen, wie z.B. Kommunikationsendgeräte, Kommunikationsnetze und/oder Datennetze angeschlossen werden. Je nach Typ einer anzuschließenden externen Kommunikationseinrichtung benötigt eine jeweilige Peripheriebaugruppe eine für diesen Typ spezifische Funktionalität. Beispielsweise benötigt eine Peripheriebaugruppe zum Anschluss eines Lokalen Netzes (LAN: Local Area Network) häufig Funktionalitäten zur schmalbandigen LAN-Vernetzung über ISDN (Integrated Services Digital Network), zur Realisierung eines Zugangs zu Telematikdiensten wie Fax oder Dateitransfer, zur computergestützten Telephonie (CTI: Computer Telephony Integration) und/oder zur Sprachübertragung mittels Internetprotokoll (VoIP: Voice over IP).

Zur Unterstützung einer für eine jeweilige externe Kommunikationseinrichtung spezifischen Funktionalität befinden sich auf einer jeweiligen Peripheriebaugruppe spezifische statische Hardware-Komponenten, die speziell für die jeweilige Funktionalität ausgelegt sind und auch nur so genutzt werden können. Durch solche Peripheriebaugruppen kann auf effiziente Weise jeweils eine spezifische, aber begrenzte Funktionalität bereitgestellt werden.

Bei diesem Konzept ist es jedoch nicht ohne weiteres möglich, die Funktionalität oder die Hardware-Ressourcen einer Peripheriebaugruppe oder einer internen Systemkomponente modular zu erweitern. Ein weiterer Mangel dieses bekannten Konzepts besteht darin, dass die Hardeware-Ressourcen einer Peripheriebaugruppe nicht von anderen Peripheriebaugruppen genutzt werden können. Die verfügbaren Hardeware-Ressourcen sind vielmehr statisch den Peripheriebaugruppen bzw. den internen Systemkomponenten zugeordnet.

Ein derartiges System ist aus dem Dokument " ALCATEL 4400 : AUTOCOMMUTATEUR PRIVE A LARGE BANDE" von BACHELET B ET AL, COMMUTATION ET TRANSMISSION, SOTELEC, PARIS, FR, Bd. 16, Nr. 1, Januar 1994 (1994-01), Seiten 21-28, ISSN: 0242-1283 bekannt.

Es ist Aufgabe der vorliegenden Erfindung eine Vermittlungseinrichtung zum Vermitteln von Verbindungen zwischen Kommunikationseinrichtungen anzugeben, in der Hardware-Ressourcen flexibel zugeordnet und erweitert werden können. Weiterhin ist eine zentrale Vermittlungssteuerung für eine derartige Vermittlungseinrichtung anzugeben.

Gelöst wird diese Aufgabe durch eine Vermittlungseinrichtung mit den Merkmalen des Patentanspruchs 1 und eine zentrale Vermittlungssteuerung mit den Merkmalen des Patentanspruchs 11.

Eine erfindungsgemäße Vermittlungseinrichtung weist einen internen Breitbandbus mit Breitbandschnittstellen auf, an die Peripherieeinrichtungen sowie interne Systemkomponenten der Vermittlungseinrichtung angekoppelt werden können. Die Peripherieeinrichtungen der Vermittlungseinrichtung dienen zum Anschluss von externen Kommunikationseinrichtungen, wie z.B. Kommunikationsendgeräten zur Sprach-, Video- oder Datenkommunikation, Faxgeräten, Personalcomputern oder weiterführenden Kommunikationsnetzen, zwischen denen Verbindungen durch die Vermittlungseinrichtung zu vermitteln sind. Beispiele von internen Systemkomponenten sind Systemprozessoren, Koppelfeldmodule, digitale Signalprozessoren oder Speicherbausteine.

Zum Übertragen von im Rahmen der Verbindungen zu vermittelnden Kommunikationsdaten über den Breitbandbus ist ein Datenpaket-Kommunikationsprotokoll vorgesehen. Das Datenpaket-Kommunikationsprotokoll ist derart ausgestaltet, dass die Kommunikationsdaten direkt und zielgerichtet über den Breitbandbus zwischen einer jeweiligen Peripherieeinrichtung und einer jeweiligen internen Systemkomponente sowie zwischen den Peripherieeinrichtungen untereinander übertragen werden können. Die Übertragung der Kommunikationsdaten erfolgt dabei in Form von Datenpaketen.

Ein wesentlicher Vorteil der Erfindung besteht darin, dass sowohl Kommunikationsdaten von Breitbandanwendungen, wie z.B. Video- oder Datenbankanwendungen, als auch Kommunikationsdaten von Schmalbandanwendungen, wie z.B. Telephonieverbindungen, über denselben Breitbandbus übertragen werden können. An den Breitbandbus angekoppelte interne Systemkomponenten der erfindungsgemäßen Vermittlungseinrichtung können somit sowohl von Schmalband- als auch von Breitbandverbindungen genutzt werden. So kann z.B. ein als interne Systemkomponente verfügbarer digitaler Signalprozessor sowohl für Schmalband- als auch für Breitbandanwendungen, ggf. gemeinsam, genutzt werden. Das erfindungsgemäße Konzept erlaubt somit eine besonders einfache Verknüpfung von Breitband- und Schmalbandanwendungen.

Ein weiterer Vorteil der Erfindung besteht darin, dass mittels des Datenpaket-Kommunikationsprotokolls Kommunikationsdaten von einer Peripherieeinrichtung direkt und zielgerichtet zu einer anderen an den Breitbandbus angekoppelten Peripherieeinrichtung übertragen werden können. Auf diese Weise können z.B. von einem Endgerät stammende Sprachdaten von derjenigen Peripherieeinrichtung, an die das betreffende Endgerät angekoppelt ist, über den Breitbandbus direkt zu einer Peripherieeinrichtung übertragen werden, an die ein Lokales Netz (LAN) mit einem Personalcomputer als Übertragungsziel der Sprachdaten angekoppelt ist. Hierbei übernimmt das Datenpaket-Kommunikationsprotokoll einen Teil einer Wegewahlfunktionalität für die Sprachdatenverbindung.

Über den Breitbandbus können die Peripherieeinrichtungen jeweils Kommunikationsdaten mit unterschiedlichen internen Systemkomponenten austauschen. Somit sind für eine jeweilige Peripherieeinrichtung unterschiedliche Funktionalitäten verschiedener interner Systemkomponenten jeweils bedarfsweise nutzbar. Die erfindungsgemäße Vermittlungseinrichtung ist damit auf flexible Weise durch Hinzufügung weiterer Systemkomponenten modular erweiterbar und neue Funktionalitäten sind leicht nachrüstbar. Hinzugefügte Systemkomponenten sind durch Ankopplung an den Breitbandbus im Prinzip für alle an den Breitbandbus gekoppelten Peripherieeinrichtungen nutzbar.

Vorteilhafte Ausführungsformen und Weiterbildungen der Erfindung sind in den abhängigen Ansprüchen angegeben.

Nach einer vorteilhaften Ausführungsform der Erfindung kann der Breitbandbus in einer zentralen Vermittlungssteuerung der Vermittlungseinrichtung integriert sein. Über die Breitbandschnittstelle des Breitbandbusses können dann die Peripherieeinrichtungen und internen Systemkomponenten der Vermittlungseinrichtung an die zentrale Vermittlungssteuerung angekoppelt werden.

Gemäß einer vorteilhaften Weiterbildung der Erfindung kann als interne Systemkomponente ein Zuordnungsmodul zum Zuordnen von Systemressourcen mindestens einer internen Systemkomponente zu mindestens einer Peripherieeinrichtung eingesetzt sein. Die Zuordnung erfolgt vorzugsweise dynamisch und bedarfsorientiert. Auf diese Weise kann beispielsweise die Funktionalität eines digitalen Signalprozessors zur Sprachcodierung je nach Bedarf unterschiedlichen Peripherieeinrichtungen zur temporären Nutzung zugeordnet werden.

Nach einer weiteren vorteilhaften Ausführungsform ist mindestens eine der Breitbandschnittstellen als generische oder anwendungsneutrale Schnittstelle ausgestaltet. Dies begünstigt eine flexible Erweiterung der Vermittlungseinrichtung mit unterschiedlichen neuen Systemkomponenten oder Peripherieeinrichtungen. Vorzugsweise kann eine standardisierte Hardwareschnittstelle oder hardwarenahe Schnittstelle vorgesehen sein.

Gemäß einer vorteilhaften Weiterbildung der Erfindung kann ein Datenspeicher zum Zwischenspeichern von über den Breitbandbus zu übertragenen Daten an den Breitbandbus angekoppelt sein. In dem Datenspeicher können zu übertragende Daten, die momentan von ihrem jeweiligen Übertragungsziel nicht übernommen werden können, temporär zwischengespeichert werden, um den Breitbandbus während dieser Zeitspanne nicht zu blockieren. Durch die Pufferfunktion eines solchen Datenspeichers kann das Senden und das Empfangen der über den Breitbandbus zu übertragenden Daten zeitlich entkoppelt werden. Zur Steuerung der Übertragung und/oder Pufferung der Daten kann ein Bussteuerungsbaustein, ein sog. Buscontroller, vorgesehen sein.

Weiterhin kann an den Breitbandbus ein Prozessor zum Verarbeiten von über den Breitbandbus zu übertragenden Daten als interne Systemkomponente angekoppelt sein.

Ferner kann ein Koppelfeldmodul zum Vermitteln der über den Breitbandbus zu übertragenden Kommunikationsdaten als interne Systemkomponente an den Breitbandbus angekoppelt sein.

Gemäß einer vorteilhaften Ausführungsform der Erfindung kann das Datenpaket-Kommunikationsprotokoll eine direkte, auf den Breitbandbus bezogene Adressierung sowohl der internen Systemkomponenten, als auch der Peripherieeinrichtungen vorsehen. Die Wegewahl der über den Breitbandbus zu übertragenden Datenpakete kann dann abhängig von einer in den jeweiligen Datenpaketen enthaltenen Adressinformation erfolgen. Vorzugsweise kann als Datenpaket-Kommunikationsprotokoll ein Internetprotokoll, z.B. aus der TCP/IP-Familie, implementiert sein. Insbesondere kann ein auf der zweiten oder dritten Schicht des OSI-Referenzmodells angesiedeltes Datenpaket-Kommunikationsprotokoll eingesetzt werden.

Vorzugsweise kann der Breitbandbus durch einen sog. PCI-Bus (Peripherial Component Interconnect) realisiert sein.

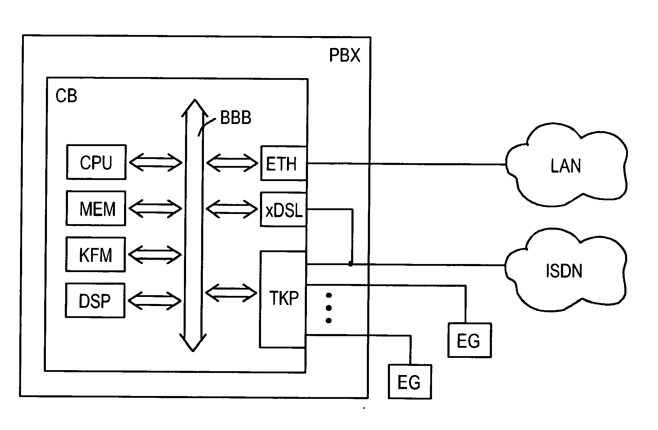

Ein Ausführungsbeispiel der Erfindung wird nachfolgend anhand der Zeichnung näher erläutert.
Die Figur zeigt eine an verschiedene Kommunikationseinrichtungen angeschlossene Vermittlungseinrichtung in schematischer Darstellung.

In der Figur ist eine Vermittlungseinrichtung PBX, z.B. eine private Nebenstellenanlage schematisch dargestellt, die an ein öffentliches Kommunikationsnetz ISDN angeschlossen ist. An die Vermittlungseinrichtung PBX sind weiterhin ein Lokales Netz LAN (Local Area Network) sowie mehrere Kommunikationsendgeräte EG angekoppelt. Die Endgeräte EG können beispielsweise Endgeräte zur Sprach-, Video- und/oder Datenkommunikation, Faxendgeräte oder Personalcomputer sein.

Die Vermittlungseinrichtung PBX weist als zentrale Vermittlungssteuerung eine zentrale Vermittlungsbaugruppe CB auf, die vorzugsweise als sog. Central Board realisiert ist. Die zentrale Vermittlungsbaugruppe CB weist ihrerseits als Peripherieeinrichtungen eine Telekommunikations-Peripheriegruppe TKP zur Schmalbandkommunikation, eine LAN-Baugruppe ETH sowie eine xDSL-Baugruppe xDSL auf. Über die Peripheriegruppe TKP sind das öffentliche Kommunikationsnetz ISDN sowie die Endgeräte EG jeweils über Schmalbandschnittstellen angekoppelt. Über die LAN-Baugruppe ETH, z.B. eine sog. Ethernet- oder Token-Ring-Baugruppe, ist das Lokale Netz LAN angeschlossen und ermöglicht so eine Breitbandvernetzung der Vermittlungseinrichtung PBX mit anderen an das Lokale Netz LAN angeschlossenen Kommunikations- und/oder Datenverarbeitungseinrichtungen.

Die xDSL-Baugruppe xDSL ist ebenfalls an das öffentliche Kommunikationsnetz ISDN angekoppelt. Durch die xDSL-Baugruppe xDSL wird ein über die Verkabelung des öffentlichen Kommunikationsnetzes ISDN führender Breitbandzugang, z.B. zum Internet realisiert. Die Abkürzung xDSL steht für unterschiedliche Varianten einer Breitbandübertragungstechnologie, bei der vorhandene Telefonleitungen als Übertragungsmedium genutzt werden. Verbreitete Vertreter dieser Zugangstechnologien sind ADSL (Asymmetric Digital Subscriber Line) und HDSL (High Bit Rate Digital Subscriber Line).

Die zentrale Vermittlungsbaugruppe CB verfügt weiterhin über einen Breitbandbus BBB an dem die LAN-Baugruppe ETH die xDSL-Baugruppe xDSL sowie die Peripheriegruppe TKP jeweils über generische und funktionsneutrale Breitbandschnittstellen angeschlossen sind. Als Breitbandbus wird in diesem Zusammenhang - entsprechend der ITU-T Empfehlung I.113 - ein Datenbus verstanden, dessen Datenübertragungsrate die sog. Primärmultiplexrate von 2,048 Mbit/Sek. übersteigt. Der Breitbandbus BBB kann mittels standarisierter Komponenten, z.B. durch einen PCI-Bus (Peripherial Component Interconnect), oder mittels sog. Embedded-Komponenten realisiert sein. Vorzugsweise können diese beiden Komponentenkonzepte miteinander kombiniert werden, um eine flexiblere Architektur zu realisieren.

Die zentrale Vermittlungsbaugruppe CB weist weiterhin einen Prozessor CPU, ein Koppelfeldmodul KFM sowie einen digitalen Signalprozessor DSP als interne Systemkomponenten auf. Die internen Systemkomponenten sind ebenfalls über generische, funktionsneutrale Breitbandschnittstellen an den Breitbandbus BBB angeschlossen. Die an den Breitbandbus BBB angeschlossenen oder anschließbaren Peripherieeinrichtungen und internen Systemkomponenten werden im folgenden mit dem Sammelbegriff Module bezeichnet.

Die Breitbandschnittstellen, durch die die Module an den Breitbandbus BBB angeschlossen sind, sind vorzugsweise durch standardisierte Hardware- oder zumindest hardwarenahe Schnittstellen realisiert. Aufgrund der Verwendung generischer und funktionsneutraler Breitbandschnittstellen kann die Vermittlungseinrichtung PBX auf einfache Weise um neue Funktionalitäten modular erweitert werden, indem ein entsprechendes Zusatzmodul an den Breitbandbus BBB angeschlossen wird. Ein solches neu angeschlossenes Modul kann unmittelbar mit allen anderen an den Breitbandbus BBB angeschlossenen Modulen kommunizieren und so seine zusätzliche Funktionalität einbringen. Zur Vereinfachung der Nachrüstung mit neuen Modulen können diese vorzugsweise als Steckkarten realisiert sein.

An den Breitbandbus BBB ist darüber hinaus ein Speicher MEM angekoppelt, der zum Zwischenspeichern von über den Breitbandbus BBB zur übertragenden Daten dient, die von ihrem jeweiligen Übertragungsziel nicht sofort übernommen werden können. Durch die Zwischenspeicherung wird verhindert, dass nicht sofort übernommene Daten den Breitbandbus BBB zeitweise blockieren.

Die Datenübertragung über den Breitbandbus BBB erfolgt paketorientiert. Zu diesem Zweck ist vorzugsweise das sog. IP-Protokoll (IP: Internetprotokoll) aus der TCP/IP-Protokollfamilie als Datenpaket-Kommunikationsprotokoll implementiert. Im Rahmen dieses IP-Protokolls werden über den Breitbandbus BBB zu übertragende Daten in Datenpakete umgesetzt, die mit einer das jeweilige Übertragungsziel auf dem Breitbandbus BBB identifizierenden Adressinformation versehen sind. Auf diese Weise können Daten direkt und zielgerichtet zwischen beliebigen an den Breitbandbus BBB angekoppelten Modulen, d.h. im vorliegenden Ausführungsbeispiel zwischen dem Prozessor CPU, dem Koppelfeldmodul KFM, dem Signalprozessor DSP, der LAN-Baugruppe ETH, der xDSL-Baugruppe xDSL, der Peripheriegruppe TKP sowie dem Speicher MEM übertragen werden. Die Datenpakete werden dabei durch ihr jeweiliges Übertragungsziel anhand der enthaltenen Adressinformation als an sich selbst adressiert erkannt und aus dem Breitbandbus BBB extrahiert. Die an den Breitbandbus BBB angekoppelten Module können somit untereinander gezielt sowohl Kommunikationsdaten, die zwischen dem Lokalen Netz LAN und/oder dem öffentlichen Kommunikationsnetz ISDN und/oder den Endgeräten EG zu übermitteln sind, als auch Steuerdaten zur Steuerung einzelner Module oder zur Anforderung von deren Verarbeitungsressourcen übertragen werden. So können beispielsweise Kommunikationsdaten von der LAN-Baugruppe ETH, der xDSL-Baugruppe xDSL und/oder der Peripheriegruppe TKP zum Signalprozessor DSP übertragen werden, um dort vor ihrer Weiterübertragung einer digitalen Verarbeitung unterzogen zu werden. Die Verarbeitungsressourcen des Signalprozessor DSP können so von verschiedenen Modulen, z.B. im Rahmen von Multimediaanwendungen oder Verschlüsselungs- und Sicherheitstechnologien, parallel genutzt werden. Dies gilt in analoger Weise für den Prozessor CPU und das Koppelfeldmodul KFM.

Das Koppelfeldmodul KFM dient im Wesentlichen dazu, auf einen Kommunikationskanal eintreffende Kommunikationsdaten einem verbindungsspezifischen ausgehenden Kommunikationskanal zuzuordnen. Die eintreffenden Kommunikationsdaten werden zu diesem Zweck zum Koppelfeldmodul KFM über den Breitbandbus BBB übermittelt, um dort einem Ausgangskanal zugeordnet und - wiederum über den Breitbandbus BBB - zum entsprechenden Peripheriemodul übertragen zu werden.

Insbesondere bei größeren Vermittlungseinrichtungen können auch mehrere Koppelfeldmodule modular an den Breitbandbus BBB angekoppelt werden. In diesem Fall kann das auf dem Breitbandbus BBB implementierte IP-Protokoll einen Teil der Wegewahlfunktionalität für zu vermittelnde Verbindungen bereitstellen, indem Kommunikationsdaten zielgerichtet zum jeweils zuständigen Koppelfeldmodul übertragen werden.

Auf diese Weise sind die Ressourcen für Breitband- und Schmalbandanwendungen für alle an den Breitbandbus BBB angekoppelten Module bedarfs- und anwendungsspezifisch verfügbar und durch Nachrüsten neuer Module flexibel erweiterbar. Das erfinderische Konzept ist zudem rückwärtskompatibel einsetzbar.

Durch die Erfindung werden sowohl Breitband- als auch Schmalbandanwendungen in eine gemeinsame Hardwarearchitektur eingebunden, die auf einheitliche Weise modular erweiterbar ist. Aufgrund der gemeinsamen Hardwarearchitektur können Schmalband- und Breitbandanwendungen auf einfache Weise verknüpft werden und auf gemeinsame Verarbeitungsressourcen zugreifen. Die erfindungsgemäße Hardwarearchitektur ist zudem in hohem Maße performant und auf Vermittlungseinrichtungen unterschiedlichster Größe skalierbar.

Im vorliegenden Ausführungsbeispiel kann das Lokale Netz LAN über die xDSL-Baugruppe xDSL breitbandig an das öffentliche Kommunikationsnetz ISDN und damit z.B. über das Internet mit externen Personalcomputern oder mit anderen Lokalen Netzen gekoppelt werden. Die Vermittlungseinrichtung PBX lässt sich weiterhin vorteilhaft bei rechnergestützten Telephonieanwendungen (Computer Telephony Integration, CTI) oder im Rahmen von sog. Voice-over-IP-Anwendungen einsetzen.

## Patentansprüche

1. Vermittlungseinrichtung (PBX) zum Vermitteln von Verbindungen zwischen Kommunikationseinrichtungen (EG, LAN, ISDN),
mit Peripherieeinrichtungen (TKP, ETH, xDSL) zum Ankoppeln der Kommunikationseinrichtungen (EG, LAN, ISDN) und mit internen Systemkomponenten (CPU, KFM, DSP) zum Steuern der Vermittlungseinrichtung (PBX),
**gekennzeichnet durch**
- einen internen Breitbandbus (BBB) mit Breitbandschnittstellen zum Ankoppeln der Peripherieeinrichtungen (TKP, ETH, xDSL) sowie der internen Systemkomponenten (CPU, KFM, DSP) und
- ein Datenpaket-Kommunikationsprotokoll zum direkten und zielgerichteten, über den Breitbandbus (BBB) führenden Übertragen von im Rahmen der Verbindungen zu vermittelnden Kommunikationsdaten zwischen einer jeweiligen Peripherieeinrichtung (TKP, ETH, xDSL) und einer jeweiligen internen Systemkomponente (CPU, KFM, DSP) sowie zwischen den Peripherieeinrichtungen (TKP, ETH, xDSL) untereinander.

2. Vermittlungseinrichtung nach Anspruch 1,
**dadurch gekennzeichnet,**
**dass** der Breitbandbus (BBB) in einer zentralen Vermittlungssteuerung (CB) integriert ist.

3. Vermittlungseinrichtung nach einem der vorhergehenden Ansprüche,
**gekennzeichnet durch**
ein als interne Systemkomponente eingesetztes Zuordnungsmodul zum Zuordnen von Systemressourcen mindestens einer internen Systemkomponente (CPU, KFM, DSP) zu mindestens einer Peripherieeinrichtung (TKP, ETH, xDSL).

4. Vermittlungseinrichtung nach einem der vorhergehenden Ansprüche,
**dadurch gekennzeichnet,**
**dass** mindestens eine der Breitbandschnittstellen als generische Schnittstelle ausgestaltet ist.

5. Vermittlungseinrichtung nach einem der vorhergehenden Ansprüche,
**dadurch gekennzeichnet,**
**dass** ein Datenspeicher (MEM) zum Zwischenspeichern von über den Breitbandbus (BBB) zu übertragenden Daten an den Breitbandbus (BBB) angekoppelt ist.

6. Vermittlungseinrichtung nach einem der vorhergehenden Ansprüche,
**dadurch gekennzeichnet,**
**dass** ein Prozessor (CPU) zum Verarbeiten von über den Breitbandbus (BBB) zu übertragenden Daten als interne Systemkomponente an den Breitbandbus (BBB) angekoppelt ist.

7. Vermittlungseinrichtung nach einem der vorhergehenden Ansprüche,
**dadurch gekennzeichnet,**
**dass** ein Koppelfeldmodul (KFM) zum Vermitteln der Kommunikationsdaten als interne Systemkomponente an den Breitbandbus (BBB) angekoppelt ist.

8. Vermittlungseinrichtung nach einem der vorhergehenden Ansprüche,
**dadurch gekennzeichnet,**
**dass** das Datenpaket-Kommunikationsprotokoll eine direkte, auf den Breitbandbus (BBB) bezogene Adressierung sowohl der internen Systemkomponenten (CPU, KFM, DSP) als auch der Peripherieeinrichtungen (TKP, ETH, xDSL) vorsieht.

9. Vermittlungseinrichtung nach Anspruch 8,
**dadurch gekennzeichnet,**
**dass** als Datenpaket-Kommunikationsprotokoll ein InternetProtokoll implementiert ist.

10. Vermittlungseinrichtung nach einem der vorhergehenden Ansprüche,
**dadurch gekennzeichnet,**
**dass** der Breitbandbus (BBB) durch einen PCI-Bus realisiert ist.

11. Zentrale Vermittlungssteuerung (CB) zum Ankoppeln von Peripherieeinrichtungen (TKP, ETH, xDSL) und internen Systemkomponenten (CPU, KFM, DSP) einer zum Vermitteln von Verbindungen zwischen Kommunikationseinrichtungen (EG, LAN, ISDN) vorgesehenen Vermittlungseinrichtung (PBX),
**gekennzeichnet durch**
- einen internen Breitbandbus (BBB) mit Breitbandschnittstellen zum Ankoppeln der Peripherieeinrichtungen (TKP, ETH, xDSL) sowie der internen Systemkomponenten (CPU, KFM, DSP) und
- ein Datenpaket-Kommunikationsprotokoll zum direkten und zielgerichteten, über den Breitbandbus (BBB) führenden Übertragen von im Rahmen der Verbindungen zu vermittelnden Kommunikationsdaten zwischen einer jeweiligen Peripherieeinrichtung (TKP, ETH, xDSL) und einer jeweiligen internen Systemkomponente (CPU, KFM, DSP) sowie zwischen den Peripherieeinrichtungen (TKP, ETH, xDSL) untereinander.

## Claims

1. Switching center (PBX) for switching connections between communications devices (EG, LAN, ISDN),
having peripheral devices (TKP, ETH, xDSL) for coupling the communications devices (EG, LAN, ISDN) and having internal system components (CPU, KFM, DSP) for controlling the switching center (PBX),
**characterized by**
- an internal broadband bus (BBB) having broadband interfaces for coupling the peripheral devices (TKP, ETH, xDSL) and the internal system components (CPU, KFM, DSP), and
- a data packet communications protocol for the direct and specifically directed transfer, routed via the broadband bus (BBB), of communication data, which are to be relayed over the connections, between a respective peripheral device (TKP, ETH, xDSL) and a respective internal system component (CPU, KFM, DSP) and also between the peripheral devices (TKP, ETH, xDSL) themselves.

2. Switching center according to claim 1,
**characterized**
**in that** the broadband bus (BBB) is integrated in a central switching controller (CB).

3. Switching center according to one of the preceding claims,
**characterized by**
an allocation module, used as an internal system component, for allocating system resources of at least one internal system component (CPU, KFM, DSP) to at least one peripheral device (TKP, ETH, xDSL).

4. Switching center according to one of the preceding claims,
**characterized**
**in that** at least one of the broadband interfaces is in the form of a generic interface.

5. Switching center according to one of the preceding claims,
**characterized**
**in that** a data memory (MEM) for buffer-storing data which are to be transferred via the broadband bus (BBB) is coupled to the broadband bus (BBB).

6. Switching center according to one of the preceding claims,
**characterized**
**in that** a processor (CPU) for processing data which are to be transferred via the broadband bus (BBB) is coupled to the broadband bus (BBB) as an internal system component.

7. Switching center according to one of the preceding claims,
**characterized**
**in that** a switching matrix module (KFM) for switching the communication data is coupled to the broadband bus (BBB) as an internal system component.

8. Switching center according to one of the preceding claims,
**characterized**
**in that** the data packet communications protocol provides direct addressing, related to the broadband bus (BBB), both for the internal system components (CPU, KFM, DSP) and for the peripheral devices (TKP, ETH, xDSL).

9. Switching center according to claim 8,
**characterized**
**in that** the data packet communications protocol implemented is an Internet protocol.

10. Switching center according to one of the preceding claims,
**characterized**
**in that** the broadband bus (BBB) is realized by a PCI bus.

11. Central switching controller (CB) for coupling peripheral devices (TKP, ETH, xDSL) and internal system components (CPU, KFM, DSP) in a switching center (PBX) provided for switching connections between communications devices (EG, LAN, ISDN),
**characterized by**
- an internal broadband bus (BBB) having broadband interfaces for coupling the peripheral devices (TKP, ETH, xDSL) and also the internal system components (CPU, KFM, DSP), and
- a data packet communications protocol for the direct and specifically directed transfer, routed via the broadband bus (BBB), of communication data, which are to be relayed over the connections, between a respective peripheral device (TKP, ETH, xDSL) and a respective internal system component (CPU, KFM, DSP) and also between the peripheral devices (TKP, ETH, xDSL) themselves.

## Revendications

1. Dispositif de commutation (PBX) pour commuter des liaisons entre des équipements de communication (EG, LAN, ISDN), avec des dispositifs périphériques (TKP, ETH, xDSL) pour coupler les équipements de communication (EG, LAN, ISDN) et avec des composantes système internes (CPU, KFM, DSP) pour commander le dispositif de commutation (PBX),
**caractérisé par**
- un bus interne à large bande (BBB) avec des interfaces large bande pour coupler les dispositifs périphériques (TKP, ETH, xDSL) ainsi que les composantes système internes (CPU, KFM, DSP) et
- un protocole de communication par paquets de données pour la transmission directe et ciblée, passant par le bus à large bande (BBB), de données de communication à commuter dans le cadre des liaisons, entre un dispositif périphérique respectif (TKP, ETH, xDSL) et une composante système interne respective (CPU, KFM, DSP) ainsi qu'entre les dispositifs périphériques (TKP, ETH, xDSL) entre eux.

2. Dispositif de commutation selon la revendication 1, **caractérisé en ce que** le bus à large bande (BBB) est intégré dans une commande centrale de commutation (CB).

3. Dispositif de commutation selon l'une des revendications précédentes, **caractérisé par** un module d'affectation, mis en oeuvre en tant que composante système interne, pour affecter des ressources système d'au moins une composante système interne (CPU, KFM, DSP) à au moins un dispositif périphérique (TKP, ETH, xDSL).

4. Dispositif de commutation selon l'une des revendications précédentes, **caractérisé en ce qu'**au moins l'une des interfaces large bande est réalisée en tant qu'interface générique.

5. Dispositif de commutation selon l'une des revendications précédentes, **caractérisé en ce qu'**une mémoire de données (MEM) pour stocker temporairement des données à transmettre sur le bus à large bande (BBB) est couplée au bus à large bande (BBB).

6. Dispositif de commutation selon l'une des revendications précédentes, **caractérisé en ce qu'**un processeur (CPU) pour traiter des données à transmettre sur le bus à large bande (BBB) est couplé, en tant que composante système interne, au bus à large bande (BBB).

7. Dispositif de commutation selon l'une des revendications précédentes, **caractérisé en ce qu'**un module de champ de couplage (KFM) pour commuter les données de communication est couplé, en tant que composante système interne, au bus à large bande (BBB).

8. Dispositif de commutation selon l'une des revendications précédentes, **caractérisé en ce que** le protocole de communication par paquets de données prévoit un adressage direct, en rapport avec le bus à large bande (BBB), non seulement des composantes système internes (CPU, KFM, DSP), mais aussi des dispositifs périphériques (TKP, ETH, xDSL).

9. Dispositif de commutation selon la revendication 8,
**caractérisé en ce qu'**est implémenté, en tant que protocole de communication par paquets de données, un protocole Internet.

10. Dispositif de commutation selon l'une des revendications précédentes, **caractérisé en ce que** le bus à large bande (BBB) est réalisé par un bus PCI.

11. Commande centrale de commutation (CB) pour coupler des dispositifs périphériques (TKP, ETH, xDSL) et des composantes système internes (CPU, KFM, DSP) d'un dispositif de commutation (PBX) prévu pour commuter des liaisons entre des équipements de communication (EG, LAN, ISDN),
**caractérisée par**
- un bus interne à large bande (BBB) avec des interfaces large bande pour coupler les dispositifs périphériques (TKP, ETH, xDSL) ainsi que les composantes système internes (CPU, KFM, DSP) et
- un protocole de communication par paquets de données pour la transmission directe et ciblée, passant par le bus à large bande (BBB), de données de communication à commuter dans le cadre des liaisons, entre un dispositif périphérique respectif (TKP, ETH, xDSL) et une composante système interne respective (CPU, KFM, DSP) ainsi qu'entre les dispositifs périphériques (TKP, ETH, xDSL) entre eux.
